# EUROPÄISCHE PATENTSCHRIFT

(11) **EP 4 259 517 B1**
(45) Veröffentlichungstag und Bekanntmachung des Hinweises auf die Patenterteilung: **18.02.2026**
(21) Anmeldenummer: 21836353.9
(22) Anmeldetag: 02.12.2021
(51) Int. Cl.: B63B 1/12, B63J 1/00, B63J 4/00, B63H 21/17, B63J 3/04

(54) **HAUSBOOT IN KATAMARAN BAUWEISE**
CATAMARAN-TYPE HOUSEBOAT
BATEAU D'HABITATION DE TYPE CATAMARAN

(30) Priorität: 10.12.2020 DE 202020005132 U
(43) Veröffentlichungstag der Anmeldung: 18.10.2023
(73) Patentinhaber: Hausbootgeist GbR, 61250 Usingen (DE); Geiger, Stefan, 61250 Usingen (DE); Geiger, Silvia, 61250 Usingen (DE)
(72) Erfinder: GEIGER, Stefan, 61250 Usingen (DE); GEIGER, Silvia, 61250 Usingen (DE)
(74) Vertreter: Kompter, Hans-Michael
(86) Internationale Anmeldenummer: PCT/EP2021/084049
(87) Internationale Veröffentlichungsnummer: WO 2022/122562

(56) Entgegenhaltungen:
- WO-A2-2020/016651
- CN-A- 105 836 041
- CN-B- 101 941 519
- DE-U1- 202019 002 311

## Beschreibung

### HINTERGRUND DER ERFINDUNG

### 1. TECHNISCHES GEBIET

Die Erfindung betrifft ein Hausboot in Katamaran Bauweise mit regenerativen Energiegewinnungsbaugruppen zur mobilen Energiegewinnung und elektrischen Energieversorgung sowie eine Wasseraufbereitungsanlage zur Gewinnung von Trinkwasser aus Fluss- oder Meerwasser und zur Klärung von anfallendem Abwasser, sowie ein Wasserfahrzeug in Katamaran Bauweise, welches eine integrierte Kran-Traverse aufweist.

### 2. STAND DER TECHNIK

Ein Hausboot ist ein Motorboot, das als kombiniertes Wohn- und Transportmittel zum Wohnen, oder auch für den Urlaub, in der Regel auf Binnengewässern genutzt wird. Zum darauf wohnen bietet es die Flexibilität einer "Mobilie" gegenüber einer "Immobilie"! Und im Urlaub bietet es die Möglichkeit - ähnlich wie bei Camping mit einem Wohnmobil an Land - die Sehenswürdigkeiten eines Urlaubsgebietes zu erkunden. Es sind große Tanks für Treibstoff, Frischwasser und Fäkalien eingebaut, die dem Boot einen größeren Bewegungsradius erlauben. Der Betrieb erfolgt oft mit Dieselmaschinen.

Die Patentanmeldung DE 41 36 379 A1 schlägt eine autarke Energieversorgung für einen elektrischen Hilfsantrieb für Segel-Yachten aus Sonnenenergie mit in sich starren Solarzellenflächen, zusätzlich zu den auf Deck befestigten Solarflächen anstelle der Spritzpersennig um die Plicht und darüber hinaus zur Schiffsmitte an der Reling außen als Schanzkleid Solarflächen mit Gelenken oder Scharnieren einfach oder mehrfach gefaltet derart befestigt sind, dass im eingezogenen (senkrechten) Zustand die äußeren Solarflächen nach außen zeigen und im ausgefahrenen, arretierten Zustand (ca. waagerecht) nach oben zeigen.

In dem deutschen Patent DE 34 42 044 C2 wird ein Katamaran-Luftkissenwasserfahrzeug beschrieben, welches in den Rümpfen oberhalb der Verdrängungsfahrt-Wasserlinie eine Erweiterung, in der sich unter anderem Hauptantriebsaggregate, Elektrogeneratoren und Wasseraufbereitungsanlagen befinden, aufweist.

Das in dem Gebrauchsmuster DE 20 2006 005 595 U1 vorgeschlagene SeeWohnMobil weist einen Kajüten-artigen Aufbau auf, an dessen vorderen und hinteren Ende jeweils ein Schlafalkoven angebracht ist, dessen Dach jeweils mit Solarflächen belegt ist. In dem Gebrauchsmuster DE 20 2018 003 026 U1 wird ein aufblasbares Hausboot mit zwei oder mehreren aufblasbaren Schwimmkörpern, einem aufblasbaren Zelt und ein oder mehreren auf dem Zelt verschiebbar angebrachten Solarmodulen beschrieben. Das Gebrauchsmuster DE 20 2018 003 391 U1 schlägt eine Einrichtung zur mobilen Energiegewinnung für die elektrische Energieversorgung von Wasserfahrzeugen mit einem SWATH-Rumpf vor, wobei Solar-, Wellenenergie- und/oder Windkraftbaugruppen für die Versorgung mit elektrischer Energie vorgesehen sind.

Das deutsche Gebrauchsmuster DE 20 2019 002 311 U1 beschreibt ein nahezu energieautarkes Hausboot mit integriertem Schubboot, auf dessen Dach ortsfeste Solarzellen angebracht sind.

Die Patentanmeldung DE 10 2019 004 515 A1 beschreibt ein System für Wasserfahrzeuge mit regenerativer Energiegewinnungsbaugruppen zur mobilen Energiegewinnung und elektrischen Energieversorgung, wobei zum Antrieb dienende Elektroantriebe mit einem in Leichtbauweise hergestellten Wasserfahrzeug verbunden werden, diese Elektroantriebe sowie alle elektrischen Verbraucher des Wasserfahrzeuges von einem eine künstliche Intelligenz aufweisenden Systemrechner gesteuert werden.

Das US Patent US 6,273,015 B1 schlägt ein elektrisch betriebenes Hochgeschwindigkeitsboot vor, bei dem die Batterien in den Torpedoartigen Rümpfen untergebracht sind. Die US Patentanmeldung US 2008/0004759 A1 beschreibt ein Katamaran-artigen Wasser-Camper, bei dem eine Überdachung über das ansonsten nach oben offene Deck gefaltete werden kann. Das US Patent US 4,739,721 A1 beschreibt einen Katamaran, der eine integrierte Bootsaufhängung im Zentralbereich des Bootes aufweist.

Die australische Patentanmeldung AU 2013206124 A1 schlägt ein Hausboot in Katamaran Bauweise vor, das auf dem Dach des Oberdecks stationäre Sonnenkollektoren aufweist, die in den Rümpfen befindliche Akkumulatoren speisen.

Das chinesische Patent CN 10941519 B beschreibt ein Schiff in Katamaran Bauweise mit Solarpaneelen und auf dem Dach des Oberdecks befindlichen Windgeneratoren.

In der chinesischen Patentanmeldung CN 105836041 A wird ein mehrstöckiges Ausflugsboot in Katamaran Bauweise vorgeschlagen mit einem Hauptdeck für den Aufenthalt von Passagieren, einem Navigationsdeck und einem Oberdeck. Sowohl auf dem Navigationsdeck als auch auf dem Oberdeck sind ortsfeste Solarpaneele vorgesehen.

Nachteilig an den vorstehend aufgeführten Wasserfahrzeugen für deren Einsatz als autarke Hausboote ist einerseits die fehlende Möglichkeit der ausschließlichen Nutzung von regenerativen Energieformen sowie andererseits die Notwendigkeit große Tanks für Frisch- und Abwasser mitführen zu müssen. Zudem sind bei den solarbetriebenen Katamaranen des Standes der Technik keine Sonnendecks vorgesehen. Die bekannten Katamarane in SWATH Bauweise haben in der Regel einen hohen Tiefgang, so dass ein Anlegen an seichteren Fluss- oder Seeufern kaum möglich ist.

Der vorliegenden Erfindung lag daher die Aufgabe zu Grunde ein Hausboot in Katamaran Bauweise zur Verfügung zu stellen, welches sich auch in seichteren Gewässern manövrieren lässt und hinsichtlich seiner Energieversorgung und seines Wasserhaushaltes weitestgehend autark ist, so dass keine großen Tanks für Treibstoff, Frischwasser und Fäkalien vorhanden sein müssen. Zudem sollte ein Sonnendeck zur Verfügung stehen, das von den Passagieren zum Ausspannen oder zum Veranstalten von Besprechungen oder Feiern verwendet werden kann.

Diese Aufgabe wurde erfindungsgemäß gelöst durch die Bereitstellung eines Hausbootes in Katamaran Bauweise mit stationären und beweglichen, regenerativen

Energiegewinnungsbaugruppen zur mobilen Energiegewinnung und elektrischen Energieversorgung sowie einer Wasseraufbereitungsanlage zur Gewinnung von Trinkwasser aus Fluss- oder Meerwasser und zur Klärung von anfallendem Abwasser, wobei mindestens ein Akkumulator und die Wasseraufbereitungsanlage in einem oder beiden Katamaran-Rümpfen eingebaut sind.

### KURZE ZUSAMMENFASSUNG DER ERFINDUNG

Gegenstand der Erfindung ist somit ein Hausboot in Doppelrumpfbauweise als Katamaran, wobei beide Rümpfe im Gegensatz zu einer SWATH-Bauweise voll aufschwimmen, mit regenerativen Energiegewinnungsbaugruppen zur mobilen Energiegewinnung und elektrischen Energieversorgung sowie eine Wasseraufbereitungsanlage zur Gewinnung von Trinkwasser aus Fluss- oder Meerwasser und zur Klärung von anfallenden Abwasser, umfassend mindestens einen stationär angebrachten Sonnenkollektor , eine Energiespeichergruppe umfassend mindestens einen Akkumulator und mindestens eine Brennstoffzelle, sowie Wasseraufbereitungsanlage umfassend mindestens eine Trinkwasserfilteranlage und mindestens eine Kläranlage, wobei mindestens ein Akkumulator und die Wasseraufbereitungsanlage in einem oder beiden Katamaran-Rümpfen eingebaut sind, wobei sich auf dem Dach des Oberdecks (112) 2 bewegliche Sonnenkollektoren befinden, welche jeweils am Rahmen des Daches des Oberdecks längs an Backbord und Steuerbord befestigt sind, zusammen im voll ausgeklappten Zustand Oberfläche des Oberdecks im Wesentlichen komplett abdecken und im aufgerichteten und gleichzeitig im zusammengeklappten Zustand jeweils ein Geländer für das Dach des Oberdecks ausbilden.).

Vorteilhafte Weiterbildungen des erfindungsgemäßen Hausbootes werden durch die Merkmale der Ansprüche 2 bis 14 beschrieben.

### KURZE BESCHREIBUNG DER ABBILDUNGEN

Fig. 1 zeigt die schematische Darstellung der Seitenansicht einer Ausführungsform des erfindungsgemäßen Hausbootes;
Fig. 2 zeigt die schematische Darstellung eines seitlichen Schnittes der Ausführungsform des erfindungsgemäßen Hausbootes in der Ausführung mit Wellenantrieb;
Fig. 3 zeigt die schematische Darstellung einer Ausführungsform des erfindungsgemäßen Hausbootes von oben;
Fig. 4 zeigt die schematische Darstellung der Bugansicht einer Ausführungsform des erfindungsgemäßen Hausbootes;
Fig. 5 zeigt die schematische Darstellung der Heckansicht einer Ausführungsform des erfindungsgemäßen Hausbootes;
Fig. 6 zeigt die schematische Darstellung eines Querschnitts einer Ausführungsform des erfindungsgemäßen Hausbootes, geschnitten in der Mitte der Kabine;
Fig. 7 zeigt die schematische Darstellung eines Querschnitts einer Ausführungsform des erfindungsgemäßen Hausbootes, geschnitten vor der Außentreppe;
Fig. 8 zeigt die schematische Darstellung eines Querschnitts einer Ausführungsform des erfindungsgemäßen Hausbootes, geschnitten im Bereich der Kran-Traverse;
Fig. 9 zeigt die schematische Darstellung des seitlichen Schnittes der Ausführungsform des erfindungsgemäßen Hausbootes in der Ausführung mit Motorgondelantrieb;
Fig. 10 zeigt die schematische Darstellung eines Querschnitts einer Ausführungsform des erfindungsgemäßen, beweglichen Sonnenkollektors in voll ausgeklappter Form;
Fig. 11 zeigt die schematische Darstellung eines Querschnitts einer Ausführungsform eines beweglichen Sonnenkollektors
   (A) in senkrechter und zusammengefalteter Form, und
   (B) in senkrechter und schräg ausgeklappter Form;
Fig. 12 zeigt die schematische Darstellung einer Aufsicht auf eine Ausführungsform eines beweglichen Sonnenkollektors von unten;
Fig. 13 zeigt die schematische Darstellung eines Längsschnitts einer Ausführungsform des Zugankers der erfindungsgemäßen, integrierten Krantraverse;
Fig. 14 zeigt die 3-dimensionale schematische Darstellung eines Details einer Rahmenecke der erfindungsgemäßen, integrierten Krantraverse;
Fig. 15 zeigt die schematische Darstellung eines Details einer Rahmenecke der erfindungsgemäßen, integrierten Krantraverse in der Aufsicht;
Fig. 16 zeigt einen Schnitt durch die Rahmenecke der Fig. 15 der Linie a - a;
Fig. 17 zeigt die schematische Darstellung eines Details eines Rahmenfußes der erfindungsgemäßen, integrierten Krantraverse in der Aufsicht;
Fig. 18 zeigt einen Schnitt durch den Rahmenfuß der Fig. 17 entlang der Linie a - a.

### DETAILLIERTE BESCHREIBUNG DER ERFINDUNG

Der Begriff "Hausboot" wie er vor- und nachstehend verwendet wird bezeichnet ein motorisiertes Wasserfahrzeug mit einem Platzangebot zum dauerhaften Aufenthalt einschließlich Übernachtung für zwei bis etwa zwölf Personen.

Der Begriff "Katamaran" oder "Katamaran Bauweise" wie er vor- und nachstehend verwendet wird bezeichnet ein Boot mit zwei Rümpfen, die fest (z.B. durch ein Tragdeck) miteinander verbunden sind. Durch die besondere Rahmenbauweise, in Verbindung mit seinen hocheffizienten Katamaran-Rümpfen, die im Hinblick auf einen möglichst geringen Tiefgang nicht in einer Small Waterplane Area Twin Hull (SWATH) Version ausgeführt sind, ist das erfindungsgemäße Solar-Hausboot äußerst vielseitig, sowohl hinsichtlich seiner Nutzung als auch bei seiner täglichen Anwendung. Der geringe Tiefgang ermöglicht es in der Nähe des Ufers von Seen, Flüssen oder Kanälen zu manövrieren. Die Möglichkeit den Innenausbau je nach Bedarf frei gestalten zu können, in Verbindung mit einer Traglast von bis zu 40 Personen an Bord, sogar unter Fahrt, lassen sehr viele Nutzungsmöglichkeiten zu. Ob als Charter-Hausboot, schwimmendes Eigenheim, Büro- oder Verwaltungsschiff, Arztpraxis oder Restaurantschiff.

Alle hierin verwendeten nautischen Begriffe haben die Bedeutung, die ein Fachmann der See- oder Flussschiffahrt beimisst. Somit bedeutet "Backbord" vom Heck zum Bug gesehen, die linke Seite des Wasserfahrzeugs, und "Steuerbord" entsprechend vom Heck zum Bug gesehen, die rechte Seite des Wasserfahrzeugs. Der Begriff "Heck" bezeichnet den hinteren Teil und "Bug" den vorderen Teil des Wasserfahrzeugs. Der Begriff "Pütting" bezeichnet einen Beschlag, an dem Taue befestigt werden können. Die Lastböcke dienen im vorliegenden Fall der Einleitung der Zugkraft eines Kranes in die Rümpfe und sind daher außen, also im Bereich des Oberdecks angebracht.

Neben seiner Vielseitigkeit prägen die folgenden technischen Besonderheiten das erfindungsgemäße Hausboot. Zum einen weist es eine sehr hohe Effizienz des Energieverbrauches im Antriebskonzept, kombiniert mit der eigenständigen Erzeugung der benötigten elektrischen Energie. Zum anderen steht neben der Autarkie im Antriebskonzept, auch der von Entsorgungsanlagen in Häfen unabhängige Umgang mit Schwarzwasser (Toilettenabwasser) durch eine eigene Kläranlage an Bord im Vordergrund. Drittens wird das benötigte Trinkwasser von einer bordeigenen Filteranlage, aus dem befahrenen See oder Flusswasser gewonnen.

Diese technische Kombination von Energiegewinnung und Wasser-Management, soll nicht nur für ein nachhaltig ökologisches Verhalten, verbunden mit der umgebenden Natur sein, sondern auch den Menschen an Bord ein Gefühl der Unabhängigkeit, Freiheit und Bequemlichkeit vermitteln. Besonders in der mobilen Nutzung, liegt die große Stärke dieser Kombination, da der "Skipper und seine Crew" ihre Reise nicht nach Häfen mit Tankstationen und Entsorgungsanlagen planen müssen, sondern völlig frei sind in der Gestaltung ihrer Zeit auf dem Wasser und ihrer Reiseziele.

Das erfindungsgemäße Hausboot wird in einer bevorzugten Ausführungsform für 4+2+29 Personen ausgelegt. Dabei sind 4 Schlafplätze fest für Langfahrten, plus 2 variable Schlafplätze im Salon vorgesehen. Daneben können zusätzlich bis zu 29 Personen für Veranstaltungen jeglicher Art auf dem Schiff, insbesondere dem Oberdeck, aufgenommen werden. Die Berechnung der Hydrostabilität wird dabei für eine maximale Personenanzahl vorgenommen. Es werden 20-35 Personen für Charterevents und Deckspartys angenommen. In solchen Fällen muss für jede Person ein Sitzplatz (auch Klappstuhl möglich) vorhanden sein. Insgesamt also 6+29 Personen.

Um bei der großen Windangriffsfläche des erfindungsgemäßen Hausbootes eine Abdrift zu verhindern und die Geradeausfahrt zu erleichtern, bildet der Lateralplan des Unterwasserschiffes ein passendes Gegengewicht. Dementsprechend hat der Tiefgang eine berechnete Mindestgröße, auf die beim Entwurf ebenso Wert gelegt wurde, wie auf einen geringen Widerstand bei hohem Gesamtgewicht. Realisiert wurde dies über schmale Rümpfe mit passendem Tiefgang.

Zusätzlich wurde konstruktiv der Lateralschwerpunkt der Aufbauten hinter den Lateralschwerpunkt des Unterwasserschiffs gelegt (Windfahneneffekt). Besonders hervorzuheben sind die speziell entworfenen, senkrecht angeordneten, opaken Tragflächenprofile an allen vier Ecken des Aufbaus, die im Zusammenspiel mit den speziell dazu entworfenen Rundungen des Aufbaus für eine Gegenkraft zur Abdrift sorgen. Somit wird das Abdriften vermindert und das Kurshalten besonders bei schräg anströmendem Seitenwind erleichtert.

Der Rumpf ist bis zur Wasserlinie ausgeschäumt, um die Rümpfe widerstandsfähig gegen Eis-Druck zu machen, und somit ein ganzjähriges Leben auf dem erfindungsgemäßen Hausboot zu ermöglichen. Gleichzeitig dient die Ausschäumung als Fundament für die Akkumulatoren, die Kläranlage und die Trinkwasserfilteranlage. Luken werden bedarfsgerecht in das Deck unter den jeweiligen Räumen eingebracht, um den Rumpf zur Unterbringung der technischen Anlagen nutzen zu können.

Die Abmessungen des erfindungsgemäßen Hausbootes sind an sich unkritisch und richten sich in erster Linie nach der in erster Linie nach der erforderlichen Fahrerlaubnis, den Erfordernissen des zu befahrenden Reviers, sowie der Anzahl der Crewmitglieder und oder Passagiere. Die Länge des Rumpfes ist grundsätzlich variabel. Im vorliegenden Entwurf sind die Rümpfe hydrodynamisch für eine Länge von 14,90 m berechnet; die Breite des Gesamtrumpfes beträgt 3,50 bis 6,50 m, vorzugsweise 4,00 bis 6,00 m, insbesondere 4,50 bis 5,50 m. Das erfindungsgemäße Hausboot weist im Süßwasser je nach Beladung einen Tiefgang von 0,60 bis 1,20 m, vorzugsweise von 0,70 bis 1,10 m, insbesondere von 0,80 bis 0,95 m auf.

In einer besonderen Ausführungsform weist es eine Länge von 14,80 m und eine Breite von 4,80 m auf.

Bei einer Nutzung des erfindungsgemäßen Hausbootes als Charterboot oder als mobiles Eigenheim werden die Außenwände und eine Reihe von verstärkten Pfosten im Innenraum als tragende Elemente konzipiert, welche zum statischen Gesamtkonzept des Aufbaues beitragen.

Generell sind große Fensterflächen vorgesehen, um viel Licht hereinzulassen und um möglichst viel von der Landschaft entlang der Reise mitzubekommen.

Ebenso sind die Vorderkanten des Aufbaues vorzugsweise abgerundet um den Schwerpunkt der Windangriffsfläche nach hinten zu verschieben.

Bei Seitenwind soll sich das Hausboot "in den Wind drehen". Dies wird dann erreicht, wenn der Lateralschwerpunkt des Aufbaues hinter dem Lateralschwerpunkt des Unterwasserschiffes liegt (Prinzip der Windfahne), was bedeutet, dass der Skeg vor dem Propeller nicht zu groß sein darf, um den Lateralplan im Heck zu reduzieren.

Der Steuerstand auf dem Hauptdeck befindet sich mittig in der Bug-Lounge. Um den Passagieren mehr Platz in der Lounge bieten zu können, kann dieser versenkbar oder von der Decke klappbar sein.

Die Inneneinrichtung auf dem Hauptdeck ist so ausgerichtet, dass für An- und Ablege-Manöver genügend Platz vorhanden ist, um ein gutes Handling der Leinen zu ermöglichen. Dazu zieht sich entlang der Mittelachse ein Mittelgang durch das Hausboot der durchgehend begangen werden kann. Darunter befindet sich ebenfalls durchgehend ein Schacht für Kabel und Rohrleitungen. Der Boden ist mit Bodenluken versehen, um jederzeit an die Versorgungsadern des Bootes gelangen zu können. Weiterhin können Leinenschränke vorgesehen werden, in denen die Leinen verstaut und getrocknet werden können. Die Frontverglasung kann großzügig geöffnet werden, um der umgebenden Natur möglich nahe sein zu können.

Fahrten mit dem Hausboot werden in der Regel tagsüber durchgeführt. Dabei soll Energie aus den Solarpanelen gewonnen werden, die dann in den Akkumulatoren zwischen-gespeichert wird, bzw. die Akkumulatoren während der Fahrt entlastet. Dadurch wird eine höhere Entladezeit und in Folge auch eine höhere Kapazität der Akkumulatoren erreicht.

Die Solarpanele an Oberdeck werden vorzugsweise von beweglichen Sonnenkollektoren gebildet, welche sich bei Nutzung des oberen Aufbaudecks vom Steuerstand aus, elektrisch an steuerbord und backbord, vertikal als Geländer gefaltet, aufstellen lassen. Für Durchfahrten unter Brücken oder im gewöhnlichen Reisebetrieb werden die Solarpanele flach an das Oberdeck aufgelegt. Liegt das Boot vor Anker, können die Solarpanele schräg oder vertikal gestellt werden, um durch eine Optimierung des Anstellwinkels in Richtung der Sonne noch mehr Sonnenenergie einfangen zu können.

Vorzugsweise besteht ein Sonnenkollektor aus zwei rechteckigen Trägerrahmen, welche jeweils im Wesentlichen die gleiche Fläche und ein oder mehrere Solarmodule aufweisen, und einem rechteckigen Hauptträger mit einer im Wesentlichen gleichen Fläche wie einer der Trägerahmen, der auf der einen Längsseite Befestigungselemente aufweist, womit dieser drehbar am Rand des Sonnendecks befestigt sind, und an dessen anderen Längsseite die beiden Trägerrahmen entlang ihrer Längsseite drehbar befestigt sind, wobei die beiden Trägerrahmen so mit dem rechteckigen Hauptträger verbunden sind, dass die Solarelemente im zusammengefalteten Zustand jeweils nach außen und im aufgespannten Zustand jeweils nach oben zeigen. Vorzugsweise weiden die Trägerrahmen und der Hauptträger jeweils eine Länge von 100 cm bis 150 cm und eine Breite von 150 cm bis 200 cm auf. Weiterhin weisen die Trägerrahmen vorzugsweise jeweils 4 Reihen mit 10 bis 20, insbesondere 14 Solarmodulen auf.

Auch können optional ausfahrbare Windkraftgeneratoren eingebaut werden, die bei Bedarf den Wind als Energiequelle nutzen. Dabei ist auf geringe Schallemissionen zu achten. Vorzugsweise werden hier sogenannte, radiale Windkraftanlagen eingesetzt, da sie deutlich leiser sind als axiale Windkraftanlagen. Liegt das Boot im strömenden Wasser, könnten die Propeller, als Wassergeneratoren vom umströmenden Wasser angetrieben, zur Rekuperation von elektrischer Energie genutzt werden. Ein zusätzlicher Wasserkraft-Generator kann, als absenkbare Option zwischen den Rümpfen integriert werden.

Eine zusätzliche Not-Brennstoffzelle kann immer dann Stromerzeugen, wenn in einer Bedarfssituation keine ausreichende Akkuladung vorhanden sein sollte, um zum Beispiel das erfindungsgemäße Hausboot aus einer Gefahrensituation zu bringen. Außerdem steht diese Möglichkeit auch dann zur Verfügung, wenn die Kraft der Sonne zeitweise nicht ausreicht, um die Akkus zu laden. Bei Fahrt kann die Brennstoffzelle in der Bedarfssituation, als Ersatzstromquelle an den Laderegler der Akkumulatoren per Hand über einen Wahlschalter zugeschaltet werden. Die Brennstoffzelle (230 V) kann dann über die ganz normalen Batterieladegeräte die Akkus laden. Sind die Akkus voll, schaltet das Ladegerät die Last automatisch ab. Fällt die Last ab, so wird die Brennstoffzelle automatisch ab geregelt. Optional kann der Brennstoffzellen betrieb zusätzlich über eine Zeitschaltuhr geregelt werden.

Der Ladestrom aus Solarpanelen, Brennstoffzelle und/oder der optionalen Wind-/ Wasserkraft kann wahlweise auf verschiedene Akkubänke umgeleitet bzw. verteilt werden.

Bei beiden Varianten wird die Stärke des Vorwärts- und Rückwärts-, bzw. Rechts- und Links-Schubs über einen normalen Fahrhebel reguliert. Die Fahrtgeschwindigkeit des erfindungsgemäßen Hausbootes ergibt sich aus der Gesamtantriebsleistung und liegt bei maximal 10,0 bis 15,0 km/h, vorzugsweise 12,0 bis 14,0 km/h, insbesondere bei etwa 13,5 km/h.

Aus Gründen der Sicherheit auf Binnenwasserstraßen, mit deren zum Teil sehr regen Verkehr, hat jeder Antrieb seine eigene Akkubank. Somit ist der Antrieb ausfallsicher redundant. Für zusätzliche Sicherheit sorgt eine Notfallschaltung der Akkubänke, um im Bedarfsfall diese auf den jeweils anderen Antrieb umschalten zu können. Somit kann man, selbst bei einem kreuzweisen Motor- oder Akku-Problem, mit dem Boot zumindest noch das nächste Etappenziel erreichen.

Wird auf die Möglichkeit der Rekuperation des anströmenden Wassers verzichtet, werden für die Einbauantriebe Segelpropeller genutzt, welche sich ohne größeren Widerstand strömungsgünstig in Fahrtrichtung ausrichten, wenn einmal ein Antriebsstrang ausfallen sollte. Soll hingegen eine Rekuperation möglich sein, also eine Energiegewinnung bei entsprechender Anströmung, muss auf einen Klapppropeller verzichtet werden und es wird ein starrer Propeller verwendet.

Nachfolgend soll das erfindungsgemäße Hausboot und die interne Krantraverse für Wasserfahrzeuge anhand Abbildungen näher erläutert werden, ohne die Erfindung auf diese spezifischen Ausführungsformen zu beschränken.

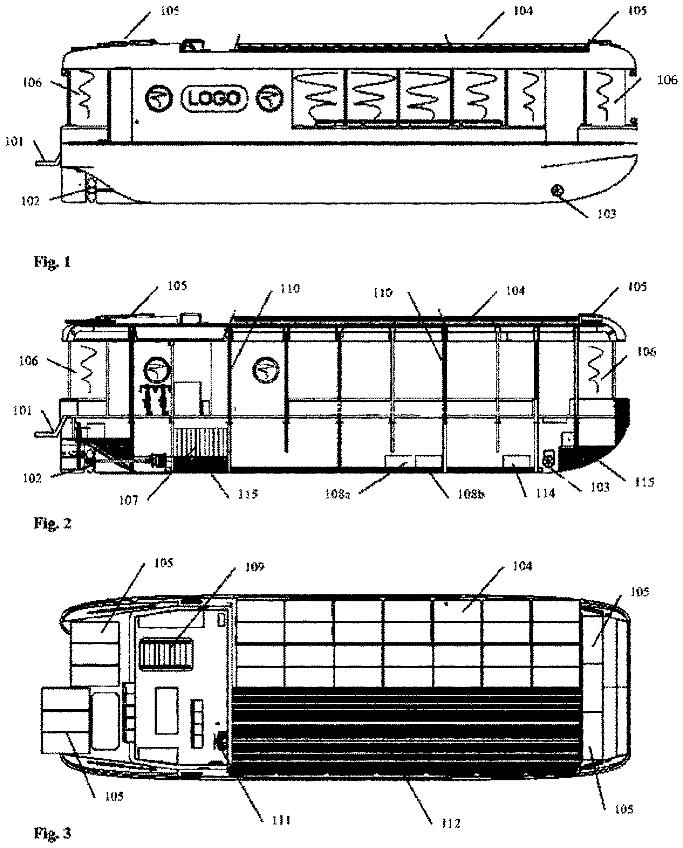

In Fig. 1 wird eine schematische Darstellung einer Ausführungsform des erfindungsgemäßen Hausbootes von der Backbordseite gezeigt. Die am Heck befindliche Badeplattform (101) ist hydraulisch oder elektrisch ein- bzw. hochklappbar und kann z.B. ein elektrisch angetriebenes Tenderboot tragen. Darunter befindet sich der Antrieb (102) in Form eines Propellers. Das Bugstrahlruder (103) dient zur besseren Manövrierbarkeit, insbesondere bei Schleusenfahrten oder bei An- und Ablege-Manövern. Auf dem Oberdeck befinden sich auf dem Dach des Wohnbereiches bewegliche Sonnenkollektoren (104) und im Bug- und Heckbereich fest installierte Solarkollektoren (105). Die vier äußeren Bug- und Heckstützen (106) an den Ecken des Hauptdecks weisen Tragflächenprofile auf, die den Wind auf höchst effektive Weise um die Konstruktion herumleiten. Die Tragflächenprofile wirken aufgrund ihrer physikalischen Eigenschaften unterstützend, um das Schiff auch bei Wind schräg von vorn oder achtern zu stabilisieren und auf Kurs zu halten. Im Bugbereich sind diese Tragflächenprofile vorzugsweise aus einem durchsichtigen Material wie Glas, Plexiglas oder Acrylglas gefertigt, um das Sichtfeld des Fahrzeugführers nicht zu verdecken.

Die Rumpflänge dieser Ausführungsform beträgt etwa 14,90 m bei einer Gesamtbreite von etwa 4,80 m.

In der Rissdarstellung von Fig. 2 erkannt man weiterhin den Antrieb (102) und die ihn mit Energie versorgende Akkumulator-Bank (107). Vorzugsweise wird das erfindungsgemäße Boot von zwei elektrischen Antriebseinheiten über Wellen und Schrauben vor Ruderblättern, je einer in jedem Rumpf angetrieben. Dabei sind in beiden Rümpfen jeweils Bugstrahlruder (103) vorgesehen, um An- und Ablege-Manöver zu vereinfachen. Die Bugstrahlruder werden von der Akkubank der technischen Ausstattung betrieben, um auch hier redundant und unabhängig vom Hauptantrieb, im Notfall zumindest im aller kleinsten Rahmen noch leicht manövrierfähig zu bleiben.

Aus Gründen der Gewichtsoptimierung sind alle Akkumulatoren vorzugsweise als Lithium-Ionen-Akkus ausgelegt. Diese werden schon in der Werft in die beiden Rümpfe eingebaut, wo sie in den ausgeschäumten Rümpfen ihr Fundament (115) finden. Das Aufschäumen erfolgt vorzugsweise mit geschlossen blasigem Polyurethanschaum (PUR-Schaum). Für Wartungsarbeiten sind die Akkus später von oben über Luken zugänglich.

In der Mitte des Rumpfes unterhalb des Wohnbereiches befinden sich die Kläranlage (108a) zur Reinigung der anfallenden Abwässer und die Wasserfilteranlage (108b) zur Herstellung von Trinkwasser aus dem Wasser des befahrenen Gewässers. Als Kläranlage (108a) ist vorzugsweise eine zertifizierte, biologische Kläranlage vorgesehen, die das Abwasser reinigen und frei von jedweden Feststoffen, in Frischwasserqualität an die Umgebung abgeben kann. Die Anlage wird auf 4-6 Personen ausgelegt. Unter anderem für Veranstaltungen mit mehreren Gästen gibt es einen Tagestank für Abwasser als Zwischenlager, da die Überlast in der eigentlichen Kläranlage nur 160l/d beträgt. Besonders bevorzugt ist eine Kläranlage enteron^{®} 80 der Firma tom logisch (https://tomlogisch.com).

Das Trinkwasser an Bord wird vorzugsweise von einer zertifizierten, Frischwasseranlage erzeugt, welche Süßwasser aus einem See, aus einer Regenwassersammelanlage oder aus einer Osmose Umkehranlage in gereinigtes Trinkwasser umwandeln kann. Diese Anlage muss vor Frost geschützt werden. Das Trinkwasser wird in einem separaten Frischwasser-Tagestank mit einem Volumen von 400 Liter gesammelt.

Je nach Einsatzrevier des Schiffes kann zusätzlich an Bord eine Regenwassersammel-anlage installiert werden, um so die Verschmutzung der Frischwasserfilter zu reduzieren. Vorzugsweise wird eine Trinkwasseranlage Aquonic^{®} der Firma tom logisch eingesetzt. Sind die Filter durch angesaugten Schmutz zugesetzt, kann sich die Leistung von 120l/h auf 60l/h halbieren. Bei starker Wasserverschmutzung könnten die Filter, aus der vorgeschalteten Sammelanlage mit Regenwasser gespült werden. Da hier ein weiterer Tank mit ca. 400 Liter installiert werden muss, wird aber aus Gewichtsgründen (= Tiefgang) generell auf eine Regenwassersammelanlage verzichtet.

Gleiches gilt für eine Seewasserentsalzungsanlage mit Umkehrosmose, welche Seewasser/Brackwasser in Süßwasser umwandeln kann. Je nach Einsatzgebiet (z.B. Niederlande) ist das durchaus sinnvoll. Es wird vorerst die kleinste Anlage mit 301/h angedacht. Optional sind aber auch größere Anlagen realisierbar. Die Bilgepumpe (114) dient zum Lenzen von Wasser, das sich bei einem Leck oder auch beim normalen Betrieb im unteren Teil der Katamaran Rümpfe (113) sammelt.

Die integrierte Kran Traverse (110) auf der Steuerbordseite erstreckt sich in einem Bereich, der vor den Akkumulatoren (107) beginnt und hinter der Wasserfilteranlage (108b) endet. Sie besteht im Wesentlichen aus verstärkten GFK-Rahmen (GFK = Glasfaser verstärkter Kunststoff) und vier darin integrierten Edelstahlankern, die an den vier Anschlagpunkten, vertikal durch die Trägersäulen bis in die Rumpfstruktur reichen, um die beim Kranen entstehen Kräfte abzuleiten und gleichmäßig auf die gesamte Bootsstruktur zu verteilen. Dadurch werden Spannungsschäden an der Bootsstruktur vermieden und das Kranen des Bootes enorm vereinfacht.

Wie aus der schematischen Aufsicht von Fig. 3 ersichtlich ist, kann man über die Außentreppe (109) vom Hauptdeck zum Oberdeck gelangen. Der Steuerstand (111) an Oberdeck, der zumeist für Anlegemanöver genutzt wird, ist im hinteren Bereich auf der Steuerbordseite angelegt, da die Arbeitsseite der Decks auf Steuerbord liegt und Steuerbord international die bevorzugte Seite zum Anlegen und Festmachen ist. Um dem Fahrzeugführer mehr Sicherheit und ein besseres Gefühl bei der Durchfahrt unter Brücken zu geben, ist der Bereich des Steuerstandes gegenüber dem restlichen Oberdeck etwas abgesenkt. Im hinteren und vorderen Bereich des Oberdecks befinden sich jeweils 3 fest eingebaute Solarpanele (105). Im mittleren Bereich des Oberdecks befinden sich die beweglichen Solarpanele (104), die auf der Abbildung an der Steuerbordseite eingeklappt sind, so dass die Planken des Sonnendecks (112) frei liegen. Auf der Backbordseite dagegen befinden sich die Solarpanele (104) im ausgeklappten Zustand.

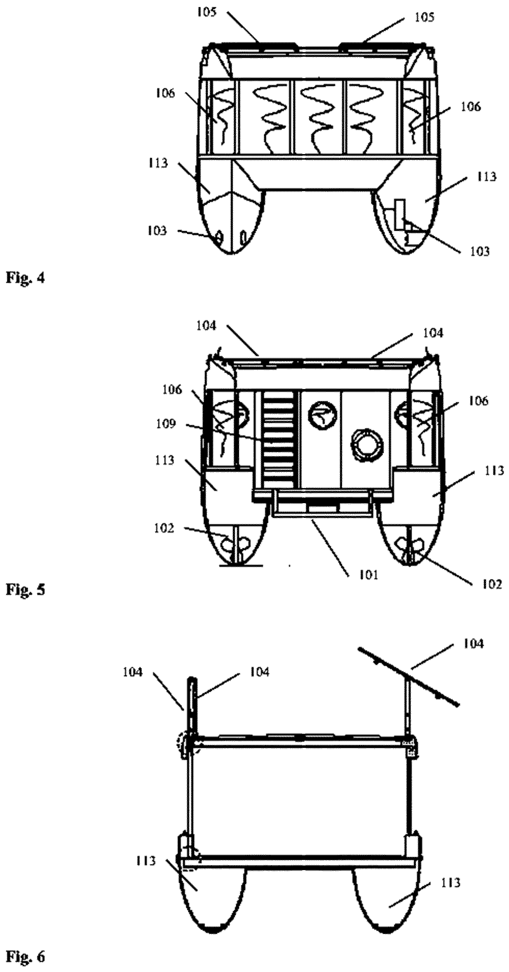

In der schematischen Darstellung der Bugansicht einer Ausführungsform des erfindungsgemäßen Hausbootes von Fig. 4 erkennt man die fest eingebauten Solarpanele (105) und die beiden Bugsäulen (106) sowie die beiden Bugstrahlruder (103). Die Katamaran Rümpfe (113) weisen im Querschnitt die Form einer nach oben geöffneten Parabel auf. Daneben zeigt die Heckansicht der Fig. 5 beiden Hecksäulen (106), die am Ende der Katamaran Rümpfe (113) befindlichen Propeller des Antriebs (102), die Außentreppe (109), die flach über dem Oberdeck liegenden Solarpanele (104) sowie die Badeplattform (101).

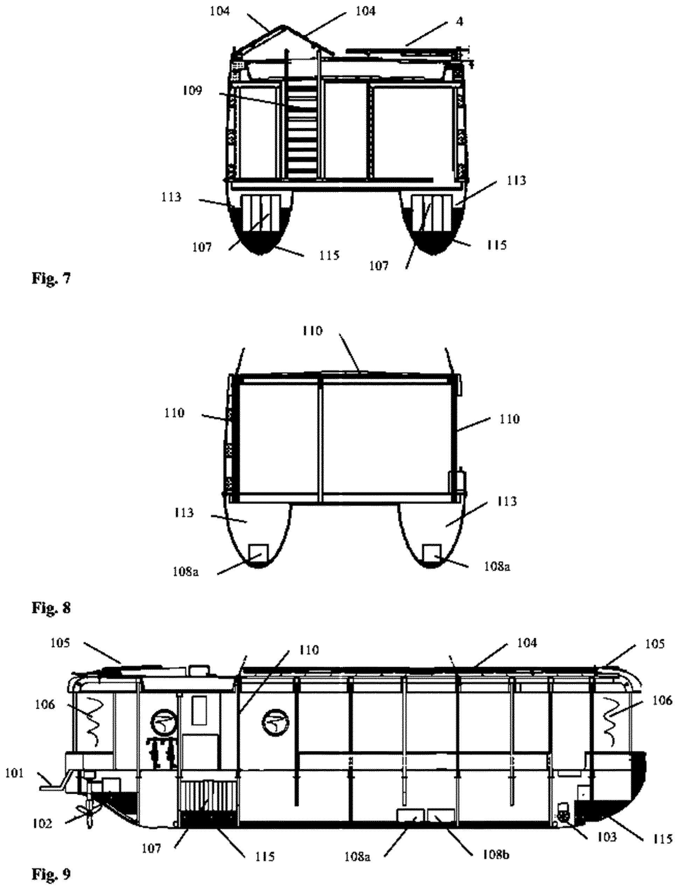

In den Figs. 6 und 7 kann man verschiedene Stellungen der erfindungsgemäßen beweglichen Solarpanele (104) erkennen. In Fig. 6 sind die beiden Solarpanele (104) auf der linken Seite vollständig an den senkrecht stehenden Hauptträger (201) angelegt und bilden zusammen ein Geländer bzw. eine Reling, dagegen wurden die beiden Solarpanele (104) auf der rechten Seite mit einer leichten Schräge vollständig am oberen Ende des Hauptträgers (201) aufgespannt. Durch das Abschrägen der Solarpanele (104) ist es möglich, auch bei niedrigem Sonnenstand z.B. am späten Nachmittag eine optimale Lichtausbeute zu erzielen. In Fig. 7 ist der Backbordseitige Hauptträger (201) schräg zum Oberdeck geneigt, das äußere Solarpanel (104) ist daran angelehnt und das innere schräg abgewinkelt. Die Steuerbordseitigen Solarpanele (104) liegen flach über der Hälfte des Oberdecks. Weiterhin kann man die in den PUR Schaum Fundamenten (115) eingebetteten Akkumulatoren (107) erkennen, die sich jeweils in den Katamaran Rümpfen (113) befinden.

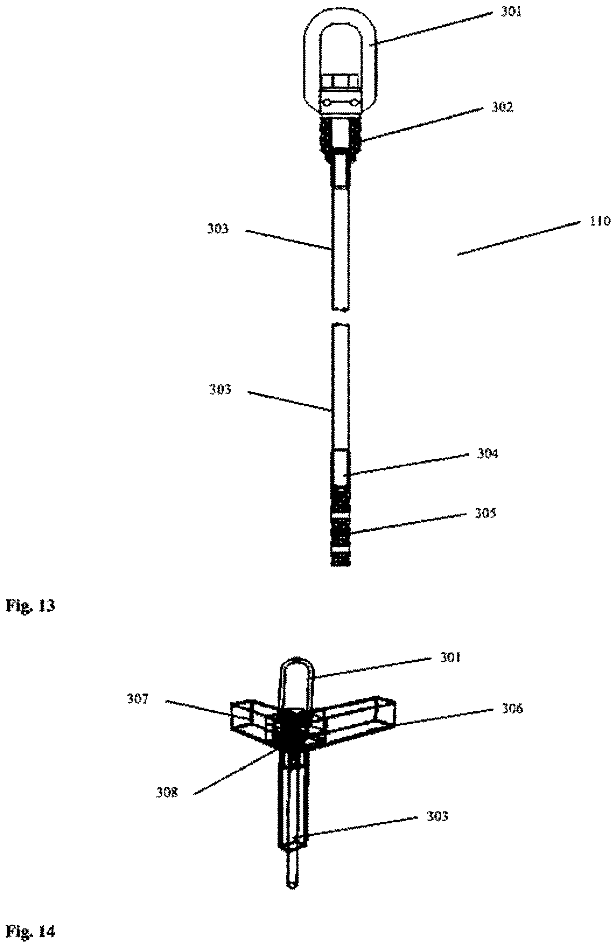

In Fig. 8 ist der hintere Teil der Kran Traverse (110) zu erkennen. Diese wird von einem rechteckigen Rahmen gebildet, an dessen Ecken sich jeweils ein Ankerelement befindet, das sich in einen der Katamaran Rümpfe erstreckt (Details hierzu sind in den Figs. 13 bis 18 dargestellt).

In Fig. 9 ist eine alternative Ausführungsform des erfindungsgemäßen Hausbootes dargestellt, die sich von der in der Fig. 2 dargestellten Ausführungsform lediglich durch die Art des Antriebs (102) unterscheidet. In dieser alternativen Ausführungsform werden Antriebsgondeln eingesetzt. Dafür wird in der Aufhängung der Gondeln ein elektrischer Aufzug vorgesehen um den Antrieb bei einem Defekt, oder während des Wasser-Wanderns bei Fahrt aus dem Wasser ziehen zu können. Dieser Gondelantrieb könnte beispielsweise eine Stellung für Fahrtschub 0° und eine Stellung für Querschub 90°haben. Die Wahl der Stellung kann optional manuell oder über Schrittmotoren vorgenommen werden.

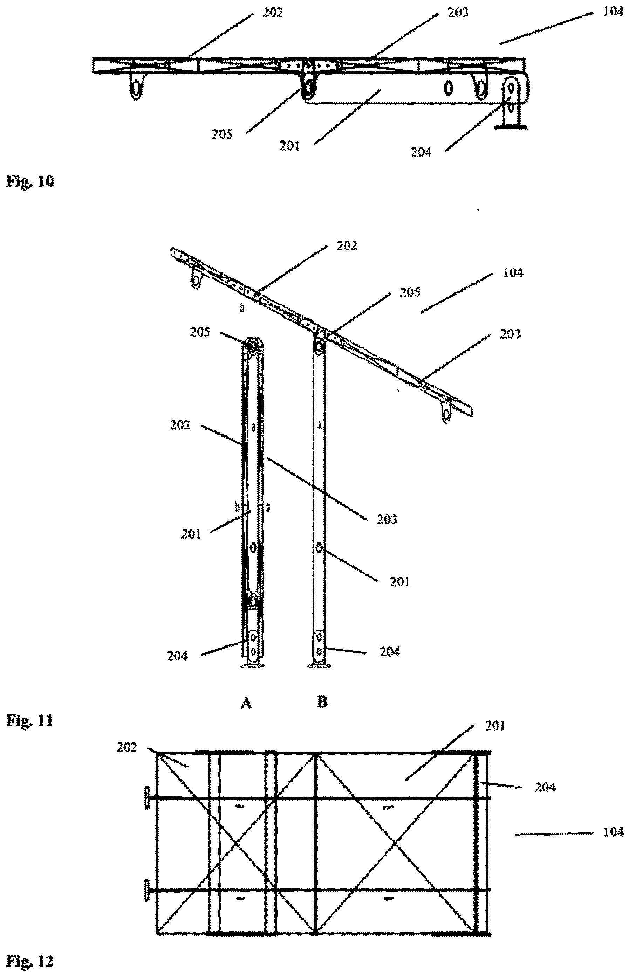

In den Figs. 10, 11A und 11B sind Querschnitt einer Ausführungsform eines beweglichen Sonnenkollektors (104) in verschiedenen Positionen schematisch dargestellt.

In Fig. 10 ist der an dem Befestigungselement (204) drehbar befestigte Hauptträger (201) um 90° gegenüber der Senkrechten gedreht. Der äußere Trägerrahmen für Solarpanele (203) liegt schlüssig auf dem Hauptträger (201) auf und der innere Trägerrahmen für Solarpanele (202) ist gegenüber dem Hauptträger (201) um einen Winkel von 180° ausgeklappt, so dass beide Solarpanele nach oben zeigen. Der Hauptträger (201) ist mit beiden Trägerrahmen (202, 203) über das Gelenk (205) drehbar verbunden. In diese Stellung bedeckt der Sonnenkollektor (104) eine Hälfte des mittleren Oberdecks. In Fig. 11A befindet sich der an dem Befestigungselement (204) drehbar befestigte Hauptträger (201) in der Senkrechten. Die beiden Trägerrahmen für Solarpanele (202, 203) liegen schlüssig auf dem Hauptträger (201) auf, so dass sie gemeinsam ein Geländer oder eine Reling ausbilden. In Fig. 11B befindet sich der an dem Befestigungselement (204) drehbar befestigte Hauptträger (201) in der Senkrechten. Die beiden Trägerrahmen für Solarpanele (202, 203) sind ausgeklappt und bilden untereinander einen Winkel von 180°. Während der äußere Trägerahmen (203) mit dem Hauptträger (201) einen spitzen Winkel, von 0 bis 90°, vorzugsweise 15 bis 75°, insbesondere 30 bis 60°bildet, befindet sich zwischen dem inneren Trägerahmen (203) und dem Hauptträger (201) der jeweils komplementäre stumpfe Winkel von 180 bis 90°, vorzugsweise 165 bis 105°, insbesondere 150 bis 120°. Diese Ausrichtung eignet sich insbesondere bei tiefstehender Sonne am frühen Vormittag oder am frühen Abend.

Fig. 12 zeigt eine Aufsicht auf eine Ausführungsform des erfindungsgemäßen, beweglichen Sonnenkollektors (104) von unten in derselben Aufstellung wie in Fig. 10.

Fig. 13 zeigt die schematische Darstellung eines Längsschnitts einer Ausführungsform des Zugankers (303) der erfindungsgemäßen, integrierten Krantraverse (110) mit der Kran-Öse (Lastbock) (301), an der beim aus dem Wasser hieven des Wasserfahrzeugs der Kranhaken befestigt wird. Der Lastbock (301) ist am oberen Ende mit dem Krananker über die obere Gewindehülse (302) verschraubt. Der am Katamaran Rumpf befestigte Rahmenfuß (305) ist über die untere Gewindehülse (304) mit dem Krananker verbunden.

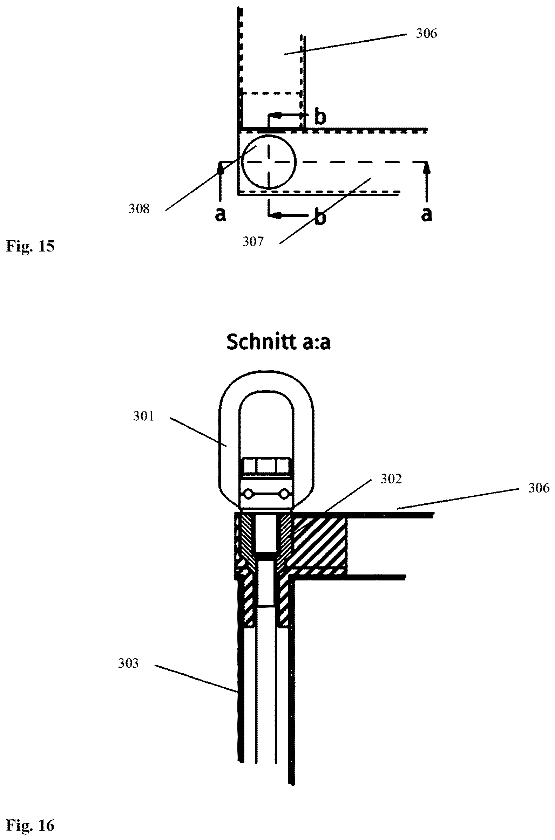

Die 3-dimensionale schematische Darstellung eines Details einer Rahmenecke der Fig. 14, die entsprechende Aufsicht der Fig. 15 und der Schnitt von Punkt a nach Punkt a durch diese Aufsicht in Fig. 16 verdeutlichen den Rahmenaufbau der erfindungsgemäßen Kran Traverse (110). Der Rahmen weist insgesamt 4 solcher Rahmenecken mit 4 Kran-Ösen (301) auf. Dabei spannen 2 längsverlaufende Rahmenstützen (307) und 2 querverlaufende Rahmenstützen (306) ein Rechteck auf, das die seitlich auftretenden Kräfte beim Hieven des Wasserfahrzeuges aufnehmen. In jeder Rahmenecke befindet sich eine Öffnung zur Aufnahme des Zugankers (303) mit dem daran befestigten Lastbock (301).

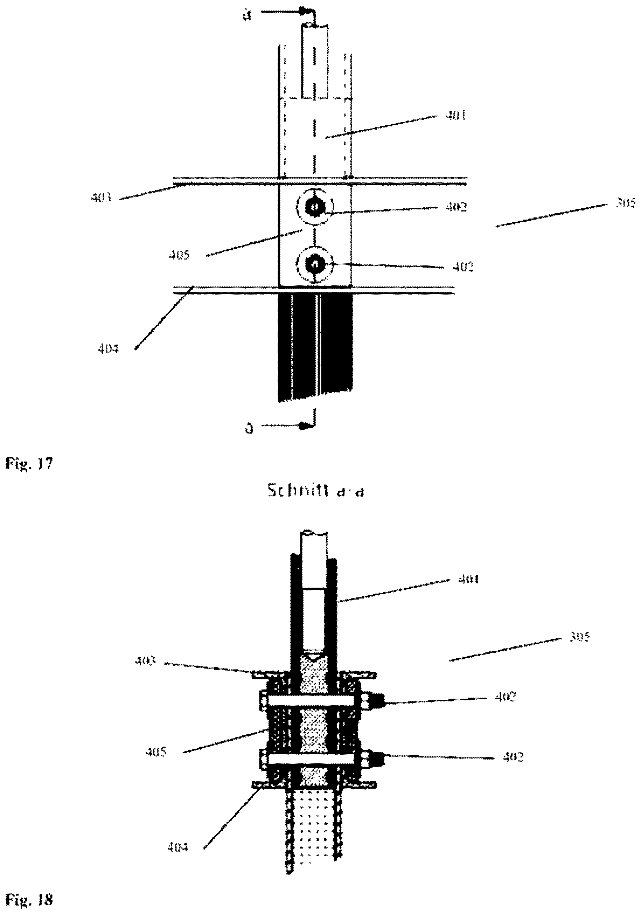

Die Figs. 17 und 18 zeigen eine Detailansicht des Rahmenfußes (305). Der Oberspant (403) und der Unterspant (404) des Katamaran Rumpfes (113) werden mit Hilfe der Distanzplatte und den durch diese geführten Befestigungselemente (402) in ihrem Abstand fixiert und an dem Rahmenfuß befestigt.

Während bestimmte Ausführungsformen der Erfindung anhand der Abbildungen gezeigt und beschrieben wurden, ist es für den Fachmann offensichtlich, dass Veränderungen und Modifikationen daran vorgenommen werden können, ohne von der Erfindung in ihren breiteren Aspekten abzuweichen. Daher besteht das Ziel der beigefügten Schutzansprüche darin, alle derartigen Änderungen und Modifikationen, die innerhalb des Umfangs der Erfindung abzudecken.

## Patentansprüche

1. Hausboot in Doppelrumpfbauweise als Katamaran, wobei beide Rümpfe (113) im Gegensatz zu einer SWATH-Bauweise voll aufschwimmen, mit regenerativen Energiegewinnungsbaugruppen zur mobilen Energiegewinnung und elektrischen Energieversorgung umfassend mindestens einen stationär angebrachten Sonnenkollektor (105), eine Energiespeichergruppeumfassend mindestens einen Akkumulator(107) und mindestens eine Brennstoffzelle, sowie eine Wasseraufbereitungsanlage zur Gewinnung von Trinkwasser aus Fluss- oder Meerwasser und zur Klärung von anfallenden Abwasser umfassend mindestens eine Trinkwasserfilteranlage (108b) und mindestens eine Kläranlage (108a), wobei mindestens ein Akkumulator (107) und die Wasseraufbereitungsanlage in einem oder beiden Katamaran-Rümpfen (113) eingebaut sind, und sich auf einem Dach des Oberdecks (112) zwei zusammenklappbare Sonnenkollektoren (104) befinden **dadurch gekennzeichnet, dass** diese jeweils am Rahmen des Daches des Oberdecks (112) längs an Backbord und Steuerbord befestigt sind, zusammen im voll ausgeklappten Zustand Oberfläche des Oberdecks im Wesentlichen komplett abdecken und im aufgerichteten und gleichzeitig zusammengeklappten Zustand jeweils ein Geländer für das Dach des Oberdecks ausbilden.

2. Hausboot nach Anspruch 1, **dadurch gekennzeichnet, dass** die Energiegewinnungsbaugruppen zur mobilen Energiegewinnung weiterhin eine oder mehrere Windkraftanlagen und/oder eine oder mehrere Wasserkraftgeneratoren aufweisen.

3. Hausboot nach einem der Ansprüche 1 oder 2, **dadurch gekennzeichnet, dass** zwecks Verbesserung des Windverhaltens die Vorderkanten des Aufbaues abgerundet sind und der Lateralschwerpunkt des Aufbaues sich hinter dem Lateralschwerpunkt der Katamaran Rümpfe (113) befindet.

4. Hausboot nach einem der Ansprüche 1 bis 3, **dadurch gekennzeichnet, dass** es jeweils im Bug- und Heckbereich zwei Stützen mit einem Tragflächenprofil aufweist.

5. Hausboot nach einem der Ansprüche 1 bis 4, **dadurch gekennzeichnet, dass** sich auf dem Dach des Oberdecks 2 bis 12, vorzugsweise 6 bis 10 stationär angebrachte Sonnenkollektoren (105) befinden.

6. Hausboot nach Anspruch 1, **dadurch gekennzeichnet, dass** mindestens ein beweglicher Sonnenkollektor (104) zur Vergrößerung der effektiven Solarfläche zwei Flächen mit ein oder mehreren Solarmodulen aufweist, wobei diese Flächen mittig längs gegeneinander klappbar sind.

7. Hausboot nach einem der Ansprüche 1 bis 6, **dadurch gekennzeichnet, dass** die Katamaran Rümpfe (113) bis zur Wasserlinie innenseitig mit einem Schaumkern gefüllt sind, der wannenförmige Aussparungen zur Aufnahme der Akkumulatoren und der Wasseraufbereitungsanlage aufweist.

8. Hausboot nach einem der Ansprüche 1 bis 7, wobei die Katamaran Rümpfe eine integrierte Kran-Traverse (110) aufweisen, die es ermöglicht das Hausboot mit Hilfe eines Kranes aus dem Wasser zu hieven, **dadurch gekennzeichnet, dass** die inneren Verstärkungen (Pütinge) im Hausboot wie eine Traverse aufgebaut sind (Integral-Traverse).

9. Hausboot nach einem der Ansprüche 1 bis 8, **dadurch gekennzeichnet, dass** die Katamaran Rümpfe (113) bei Reisebeladung und einer Besatzung von 1 bis 8 Personen einen Tiefgang von 500 bis 1000 mm, vorzugsweise von 700 bis 900 mm, insbesondere von 825 bis 875 mm aufweisen.

10. Hausboot nach einem der Ansprüche 1 bis 9, **dadurch gekennzeichnet, dass** sich in den Katamaran Rümpfen jeweils
• eine elektrische Antriebseinheit (102), welche über eine Welle die Schiffsschraube antreibt, sowie
• ein Bugstrahlruder (103) für An- und Ablegemanöver
befinden, welche beide von dem jeweiligen Akkumulator (107) mit Energie versorgt werden.

11. Hausboot nach einem der Ansprüche 1 bis 10, **dadurch gekennzeichnet, dass** jede Antriebseinheit (102) mit einer gesonderten Akkumulatorenbank (107) verbunden ist.

12. Hausboot nach Anspruch 8, **dadurch gekennzeichnet, dass** der Schiffskörper eine Käfig-artig ausgeführte, integrierte Kran-Traverse aufweist.

13. Hausboot nach Anspruch 8 oder 12, **dadurch gekennzeichnet, dass** es an vier Stellen des Oberdecks (112) vier Anschlagspunkte (301) aufweist, welche sich in einen Profilrahmen in der Decke des Hausboots (Aufbaudeck) befinden, angeschlossen an Ankern (303), die in vertikalen, mittragenden Rahmenstützen verlaufen, und im Bereich der Katamaran Rümpfe (113) mit den Hauptdeckbalken und den Schotten verbunden sind.

14. Hausboot nach einem der Ansprüche 1 bis 13, **dadurch gekennzeichnet, dass** es für bis zu 35 Personen ausgelegt ist.

## Claims

1. A houseboat in a double-hull design as a catamaran, wherein both hulls (113) are fully buoyant, in contrast to a SWATH design, having regenerative energy generation assemblies for mobile energy generation and electrical energy supply comprising at least one stationary attached solar collector (105), an energy storage group comprising at least one accumulator (107) and at least one fuel cell, as well as a water treatment plant for obtaining drinking water from river water or seawater and for treating occurring wastewater, comprising at least one drinking water filtration system (108b) and at least one wastewater treatment plant (108a), wherein at least one accumulator (107) and the water treatment plant are installed in one or both catamaran hulls (113), and two foldable solar collectors (104) are located on a roof of the upper deck (112), **characterized in that** these are each fastened longitudinally to the frame of the roof of the upper deck (112) on the port and starboard sides, together, when fully extended, they essentially completely cover the surface of the upper deck, and when erected and simultaneously folded, they each form a railing for the roof of the upper deck.

2. The houseboat according to claim 1, **characterized in that** the energy generation assemblies for mobile energy generation furthermore comprise one or more wind turbines and/or one or more hydroelectric generators.

3. The houseboat according to any one of claims 1 or 2, **characterized in that**, in order to improve wind behavior, the leading edges of the superstructure are rounded and the lateral center of gravity of the superstructure is located behind the lateral center of gravity of the catamaran hulls (113).

4. The houseboat according to any one of claims 1 to 3, **characterized in that** it has two supports having an airfoil profile in the bow and stern areas, respectively.

5. The houseboat according to any one of claims 1 to 4, **characterized in that** there are 2 to 12, preferably 6 to 10 are stationary solar collectors (105) on the roof of the upper deck.

6. The houseboat according to claim 1, **characterized in that** at least one movable solar collector (104) has two surfaces having one or more solar modules to increase the effective solar area, wherein these surfaces are foldable longitudinally toward one another in the middle.

7. The houseboat according to any one of claims 1 to 6, **characterized in that** the catamaran hulls (113) are filled on the inside up to the waterline using a foam core, which has tub-shaped recesses for accommodating the accumulators and the water treatment plant.

8. The houseboat according to any one of claims 1 to 7, wherein the catamaran hulls have an integrated crane traverse (110) which enables it to lift the houseboat out of the water with the aid of a crane, **characterized in that** the internal reinforcements (chains) in the houseboat are constructed like a traverse (integral traverse).

9. The houseboat according to any one of claims 1 to 8, **characterized in that** the catamaran hulls (113), when loaded for travel and with a crew of 1 to 8 persons, have a draft of 500 to 1000 mm, preferably 700 to 900 mm, in particular 825 to 875 mm.

10. The houseboat according to any one of claims 1 to 9, **characterized in that** the catamaran hulls each contain
• an electric drive unit (102), which drives the ship propeller via a shaft, as well as
• a bow thruster (103) for docking and undocking maneuvers, both of which are supplied with energy by the respective accumulator (107).

11. The houseboat according to any one of claims 1 to 10, **characterized in that** each drive unit (102) is connected to a separate accumulator bank (107).

12. The houseboat according to claim 8, **characterized in that** the hull has a cage-like, integrated crane traverse.

13. The houseboat according to claim 8 or 12, **characterized in that** it has four attachment points (301) at four points on the upper deck (112), which are located in a profile frame in the ceiling of the houseboat (superstructure deck), connected to anchors (303) which run in vertical, load-bearing frame supports, and are connected to the main deck beams and the bulkheads in the area of the catamaran hulls (113).

14. The houseboat according to any one of claims 1 to 13, **characterized in that** it is designed for up to 35 persons.

## Revendications

1. Péniche à double coque de type catamaran, dans laquelle les deux coques (113) sont entièrement flottantes, contrairement à une conception SWATH, avec des ensembles de production d'énergie régénératifs pour la production d'énergie mobile et la fourniture d'énergie électrique comprenant au moins un capteur solaire stationnaire (105), un groupe de stockage d'énergie comprenant au moins un accumulateur (107) et au moins une pile à combustible, ainsi qu'une station de traitement d'eau pour la production d'eau potable à partir d'eau de rivière ou d'eau de mer et pour le traitement des eaux usées, comprenant au moins un système de filtration d'eau potable (108b) et au moins une station de traitement des eaux usées (108a), dans laquelle au moins un accumulateur (107) et la station de traitement d'eau sont installés dans l'une ou les deux coques de catamaran (113), et deux capteurs solaires pliables (104) situés sur le toit du pont supérieur (112), **caractérisée en ce que** ceux-ci sont chacun fixés longitudinalement à la structure du toit du pont supérieur (112) sur les côtés bâbord et tribord, ensemble, une fois entièrement déployés, ils recouvrent pratiquement toute la surface du pont supérieur, et lorsqu'ils sont dressés et repliés simultanément, ils forment chacun une rambarde pour le toit du pont supérieur.

2. Péniche selon la revendication 1, **caractérisée en ce que** les ensembles de production d'énergie pour la production d'énergie mobile comprennent également une ou plusieurs éoliennes et/ou un ou plusieurs générateurs hydroélectriques.

3. Péniche selon l'une quelconque des revendications 1 ou 2, **caractérisée en ce que**, afin d'améliorer le comportement au vent, les bords avant de la structure sont arrondis et le centre de gravité latéral de la structure est situé derrière le centre de gravité latéral des coques de catamaran (113).

4. Péniche selon l'une quelconque des revendications 1 à 3, **caractérisée en ce qu'**elle possède deux supports avec un profil aérodynamique dans les zones de proue et de poupe.

5. Péniche selon l'une quelconque des revendications 1 à 4, **caractérisée en ce qu'**elle comprend 2 à 12, de préférence 6 à 10, capteurs solaires fixes (105) sur le toit du pont supérieur.

6. Péniche selon la revendication 1, **caractérisée en ce qu'**au moins un capteur solaire mobile (104) possède deux surfaces avec un ou plusieurs modules solaires pour augmenter la surface solaire effective, dans laquelle ces surfaces sont pliables longitudinalement l'une par rapport à l'autre au milieu.

7. Péniche selon l'une quelconque des revendications 1 à 6, **caractérisée en ce que** les coques de catamaran (113) sont remplies à l'intérieur jusqu'à la ligne de flottaison d'un noyau en mousse comportant des cavités en forme de cuvette destinées à recevoir les accumulateurs et la station de traitement d'eau.

8. Péniche selon l'une quelconque des revendications 1 à 7, dans laquelle les coques de catamaran comprennent une traverse de grue intégrée (110) qui permet de soulever la péniche hors de l'eau à l'aide d'une grue, **caractérisée en ce que** les renforts internes (cadènes) de la péniche sont construits comme une traverse (traverse intégrée).

9. Péniche selon l'une quelconque des revendications 1 à 8, **caractérisée en ce que** les coques de catamaran (113) comprennent un tirant d'eau de 500 à 1 000 mm, de préférence de 700 à 900 mm, en particulier de 825 à 875 mm lorsqu'elle est chargée pour le voyage et avec un équipage de 1 à 8 personnes.

10. Péniche selon l'une quelconque des revendications 1 à 9, **caractérisée en ce que** les coques de catamaran contiennent chacune
• une unité d'entraînement électrique (102) qui actionne l'hélice du navire via un arbre, ainsi que
• un propulseur d'étrave (103) pour les manœuvres d'accostage et de désaccostage,
tous deux étant alimentés en énergie par leur accumulateur respectif (107).

11. Péniche selon l'une quelconque des revendications 1 à 10, **caractérisée en ce que** chaque unité d'entraînement (102) est connectée à une banque d'accumulateurs séparée (107).

12. Péniche selon la revendication 8, **caractérisée en ce que** la coque comporte une traverse de grue intégrée en forme de cage.

13. Péniche selon la revendication 8 ou 12, **caractérisée en ce qu'**elle comporte quatre points de fixation (301) à quatre emplacements sur le pont supérieur (112), situés dans un châssis en profilés du plafond de la péniche (pont de la superstructure), reliés à des ancres (303) qui courent dans des supports verticaux porteurs, et sont reliés aux poutres et cloisons du pont principal dans la zone des coques de catamaran (113).

14. Péniche selon l'une quelconque des revendications 1 à 13, **caractérisée en ce qu'**elle est conçue pour accueillir jusqu'à 35 personnes.
